# Europäisches Patentamt
## European Patent Office
## Office européen des brevets

(19)

(11) Veröffentlichungsnummer: **0 208 915**
**B1**

(12) # EUROPÄISCHE PATENTSCHRIFT

(45) Veröffentlichungstag der Patentschrift:
**27.12.89**

(51) Int. Cl.⁴: **H 04 L 27/00, H 04 L 5/02**

(21) Anmeldenummer: **86108028.1**

(22) Anmeldetag: **12.06.86**

(54) Verfahren zum Demodulieren eines frequenz- und phasenumgetasteten Signals.

(30) Priorität: **19.07.85 DE 3525822**

(43) Veröffentlichungstag der Anmeldung:
**21.01.87 Patentblatt 87/4**

(45) Bekanntmachung des Hinweises auf die Patenterteilung:
**27.12.89 Patentblatt 89/52**

(84) Benannte Vertragsstaaten:
**DE FR GB NL SE**

(56) Entgegenhaltungen:
**EP-A-0 074 858**
**EP-A-0 186 884**
**US-A-3 111 625**

**R.C. DIXON: "Spread spectrum systems", 1976,**
**Seiten 155-158, J. Wiley & Sons, US;**
**IEEE TRANSACTIONS ON COMMUNICATIONS,**
**Band COM-30, Nr. 8, August 1982, Seiten 1918-1925,**
**IEEE, New York, US; Y. SAITO et al.: "16 QAM**
**carrier recovery PLL for service-channel**
**transmission using FSK additional modulation"**
**ALTA FREQUENZA, Band 52, Nr. 6,**
**November/Dezember 1983, Seiten 460-467, Milano,**
**IT; R. MACCHI et al.: "Field evaluation of a 70 Mb/s**
**7/11 GHz digital radio link"**

(73) Patentinhaber: **ANT Nachrichtentechnik GmbH,**
**Gerberstrasse 33, D-7150 Backnang (DE)**

(72) Erfinder: **Maurer, Robert, Prof. Dr., Am Staden 11,**
**D-6600 Saarbrücken (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zum Demodulieren eines sowohl durch Frequenzumtastung als auch durch Phasenumtastung modulierten Trägersignals.

Bereits aus dem Aufsatz von M.J. O'Mahony in Electronics Letters, 14. Okt. 196, Vol. 12, No. 21, S. 550, 551 ist es bekannt, die beiden Modulationsarten der Frequenzumtastung (FSK) und der Phasenumtastung (PSK) gleichzeitig auf ein Trägersignal anzuwenden. Es wird in dieser Literaturstelle gezeigt, daß ein solches frequenz- und phasenumgetastetes Signal sich durch eine geringere Fehlerwahrscheinlichkeit auszeichnet als Signale, welche, um genausoviele Signalzustände zu übertragen, in bekannter Weise mehrfach phasenmoduliert oder phasen- und amplitudenmoduliert sind.

Es ist aus R.C. Dixon: "Spread spectrum systems", 1976, S. 155 - 158, J. Wiley & Sons, US und der EP-A-186 884 (publiziert 9.7.86) bekannt, daß mit einer Costas-Phasenregelschleife ein frequenzmoduliertes Signal oder ein phasenmoduliertes (PSK) Signal demoduliert werden kann. In einer solchen Costas-Phasenschleife wird das frequenz- oder phasenmodulierte Eingangssignal zunächst in einem ersten Multiplizierer mit einem von einem spannungsgesteuerten Oszillator abgegebenen Bezugssignal und parallel dazu in einem zweiten Multiplizierer mit dem um $\pi/2$ phasenverschobenen Bezugssignal multipliziert. Dann werden aus den Ausgangssignalen der Multiplizierer die unterhalb der Trägerfrequenz liegenden Signalanteile herausgefiltert. Die aus den Ausgangssignalen der Multiplizierer herausgefilterten Signalanteile werden miteinander zu einem Signal durch Multiplikation verknüpft, woraus die Information über die Phasenablage zwischen dem modulierten Eingangssignal und dem vom spannungsgesteuerten Oszillator abgegebenen Bezugssignal herausgefiltert und dem spannungsgesteuerten Oszillator (VCO2) zugeführt wird.

In der EP-A-141 466 ist eine modifizierte Costas-Phasenregelschleife zur Demodulation eines 4-phasenumgetasteten Signals beschrieben.

Der Erfindung liegt nun die Aufgabe zugrunde, ein Verfahren zum Demodulieren eines sowohl frequenz- als auch phasenumgetasteten Signals anzugeben, das sich mit einem möglichst geringen Schaltungsaufwand realisieren läßt.

Erfindungsgemäß wird diese Aufgabe durch die Merkmale des Anspruchs 1 gelöst.

Anhand von in der Zeichnung dargestellten Ausführungsbeispielen wird nun die Erfindung näher erläutert. In der Zeichnung zeigen:

Fig. 1  ein Blockschaltbild zur FSK-2PSK Modulation eines Trägersignals und
Fig. 2  ein Blockschaltbild zur Demodulation dieses FSK-2PSK modulierten Signals,
Fig. 3  ein Blockschaltbild zur FSK-QPSK Modulation eines Trägersignals und
Fig. 4  ein Blockschaltbild zur Demodulation dieses FSK-QPSK modulierten Signals.

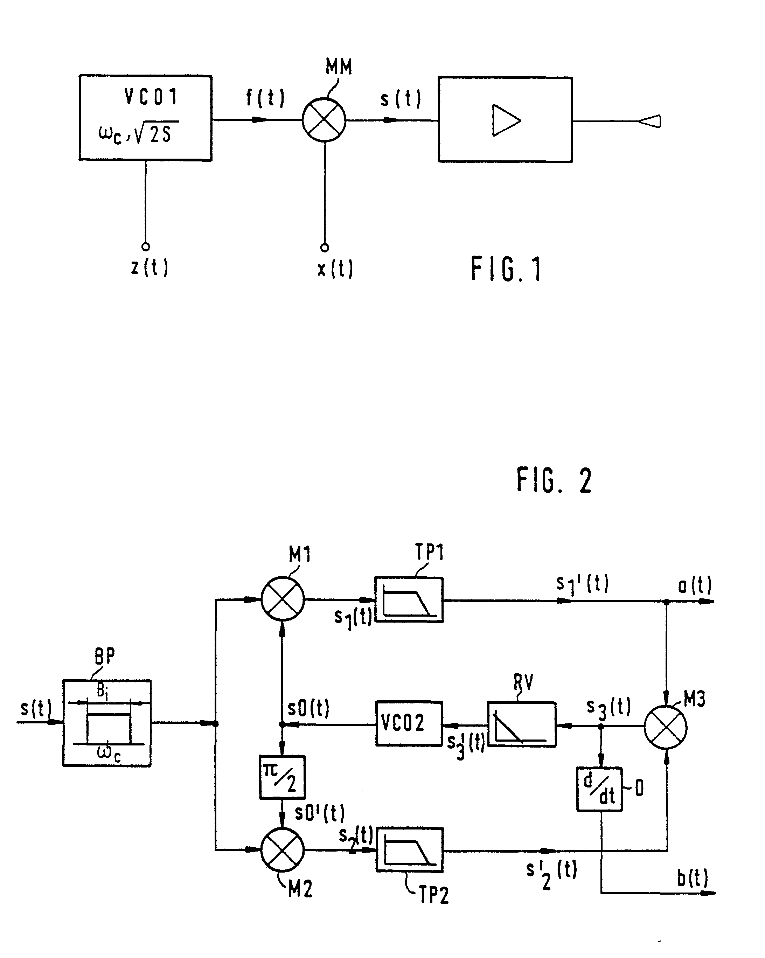

Ein Verfahren zur Modulation eines Trägersignals sowohl durch Phasen- als auch Frequenzumtastung, wobei die Phase zwei verschiedene Zustände und auch die Frequenz zwei verschiedene Zustände ($\omega_c + \Delta\omega$, $\omega_c - \Delta\omega$) annehmen kann, verdeutlicht das Blockschaltbild in Fig. 1. Hierbei gibt ein spannungsgesteuerter Oszillator VCO1 ein Trägersignal

$$f(t) = \sqrt{2S} \cos \left( \omega_c t + \Delta\omega \int_o^t z(t) \, dt + \varphi_\tau \right) \tag{1}$$

ab, das gesteuert durch ein digitales Signal $z(t) = \pm 1$ entweder die um $\alpha\omega$ erhöhte oder erniedrigte Mittenfrequenz $\omega_c$ annimmt. Das Ausgangssignal $f(t)$ des spannungsgesteuerten Oszillators VCO1 wird schließlich in einem Multiplizierer MM mit einem zweiten digitalen Signal $x(t) = \pm 1$ multipliziert, so daß daraus ein die Phasenzustände 0° oder 180° annehmendes Signal entsteht. Am Ausgang des Modulators liegt also ein sowohl frequenz- als auch phasenumgetastetes Signal

$$s(t) = x(t) \sqrt{2S} \cos \left( \omega_c t + \Delta\omega \int_o^t z(t) \, dt + \varphi_\tau \right) \tag{2}$$

vor, das nun zu einem Empfänger übertragen wird.

Im Empfänger wird dieses Signal $s(t)$ nach dem folgenden Verfahren demoduliert, das auf dem Funktionsprinzip einer Costas-Regelschleife beruht.

Wie aus der Figur 2 hervorgeht, wird das modulierte Signal $s(t)$ zunächst über einen Bandpaß BP gleichzeitig zwei Multiplizierern M1 und M2 zugeführt. Der Bandpaß BP besitzt eine Durchlaßbandbreite $B_i = 2/T$, wobei $T$ der Symboldauer der Datensignale $x(t)$ und $z(t)$ entspricht, und seine Mittenfrequenz ist gleich der Trägersignalfrequenz $\omega_c$.

Das FSK-2PSK modulierte Eingangssignal $s(t)$ wird im ersten Mischer M1 mit einem von einem spannungsgesteuerten Oszillator VCO2 abgegebenen Bezugssignal

$$so(t) = 2 \cos (\omega_c t + \varphi_o) \tag{3}$$

und im zweiten Mischer M2 mit dem um $\pi/2$ phasenverschobenen Bezugssignal

$$so'(t) = -2 \sin (\omega_c t + \varphi_o) \tag{4}$$

multipliziert.

Als Ausgangssignale der Multiplizierer M1 und M2 ergeben sich dann

$$s_1(t) = x(t) \sqrt{2S} \cos \left(\omega_c t + \Delta\omega \int_o^\tau z(t) \, dt + \varphi_\tau\right) \ 2\cos\left(\omega_c t + \varphi_o\right) \tag{5}$$

$$s_1(t) = x(t)\sqrt{2S}\left[\cos\left(-\Delta\omega\int_o^\tau z(t) \, dt - \varphi_\tau + \varphi_o\right) + \cos\left(\Delta\omega\int_o^\tau z(t) \, dt + 2\omega_c t + \varphi_\tau + \varphi_o\right)\right]$$

und

$$s_2(t) = -x(t) \sqrt{2S} \cos \left(\omega_c t + \Delta\omega \int_o^\tau z(t) \, dt + \varphi_\tau\right) 2 \sin\left(\omega_c t + \varphi_o\right) \tag{6}$$

$$s_2(t) = -x(t)\sqrt{2S}\left[\sin\left(-\Delta\omega\int_o^\tau z(t) \, dt - \varphi_\tau + \varphi_o\right) + \sin\left(\Delta\omega\int_o^\tau z(t) \, dt + 2\omega_c t + \varphi_\tau + \varphi_o\right)\right].$$

Anschließende Tiefpaßfilter TP1 und TP2 lassen nur die unterhalb der Trägerfrequenz liegenden Anteile der Multipliziererausgangssignale $s_1(t)$ und $s_2(t)$ durch, so daß an den Ausgängen der Tiefpaßfilter TP1 und TP2 die Signale

$$s_1'(t) = x(t) \sqrt{2S} \cos \left(\Delta\omega \int_o^\tau z(t) \, dt + \varphi_\tau - \varphi_o\right) \tag{7}$$

und

$$\tag{8}$$

$$s_2'(t) = x(t) \sqrt{2S} \sin \left(\Delta\omega \int_o^\tau z(t) \, dt + \varphi_\tau - \varphi_o\right)$$

vorliegen.

Diese ausgefilterten Signale $s_1'(t)$ und $s_2'(t)$ werden darauf in einem Multiplizierer M3 multiplikativ miteinander verknüpft, wodurch das Signal

$$s_3(t) = x^2(t) \ 2S\cos\left(\Delta\omega\int_o^\tau z(t) \, dt + \varphi_\tau - \varphi_o\right)$$

entsteht, welches mit $x(t) = \pm 1 \rightarrow x^2(t) = 1$ $\tag{9}$

$$s_3(t) = S\sin\left[2\,\Delta\omega\int_o^\tau z(t) \, dt + 2\,(\varphi_\tau - \varphi_o)\right]$$

ist.

Bei sehr kleinem Phasenversatz $\varphi_\tau - \varphi_o$ zwischen dem Eingangssignal und dem Bezugssignal des spannungsgesteuerten Oszillators VCO1 und unter der Voraussetzung, daß der Modulationshub klein ist (ca. 0,3) also der Anteil

$$\Delta\omega\int_o^\tau z(t) \, dt << \quad \text{ist, gilt}$$

$$s_3(t) \simeq S\left[2\,\Delta\omega\int_o^\tau z(t) \, dt + 2\,(\varphi_\tau - \varphi_o)\right]. \tag{10}$$

Dieses Signal $s_3(t)$ gemäß (10) durchläuft das Regelfilter RV, welches nur die Regelspannung

$$s_3'(t) \simeq S \, 2 \, (\varphi_\tau - \varphi_o) \tag{11}$$

durchläßt, welche als Steuergröße an dem spannungsgesteuerten Oszillator VCO2 wirksam wird.

Das Signal $s_1'(t)$ am Ausgang des Tiefpaßfilters-TP1 hat unter der eben genannten Voraussetzung, daß $\Delta\omega \int_o^\tau z(t) \, dt \ll 1$ und $(\varphi_\tau - \varphi_o) \simeq 0$ ist, die Form

$$\tag{12}$$

$$a(t) \simeq x(t) \sqrt{2S}$$

und ist damit direkt proportional zu dem zu demodulierenden Phasentastsignal x(t).

Das Frequenzumtastsignal z(t) wird mit Hilfe eines Differenzierers D aus dem Ausgangssignal $s_3(t)$ gemäß (10) des Multiplizierers M3 abgeleitet. Die Differenzierung von $s_3(t)$ ergibt

(13)

$$b(t) = S \frac{d}{dt} \left[ 2\Delta\omega \int_0^\tau z(t)\, dt + 2\, (\varphi_\tau - \varphi_0) \right]$$

$$b(t) = 2S\Delta\omega z(t)$$

Das Signal b(t) ist also dem Frequenzumtastsignal z(t) direkt proportional.

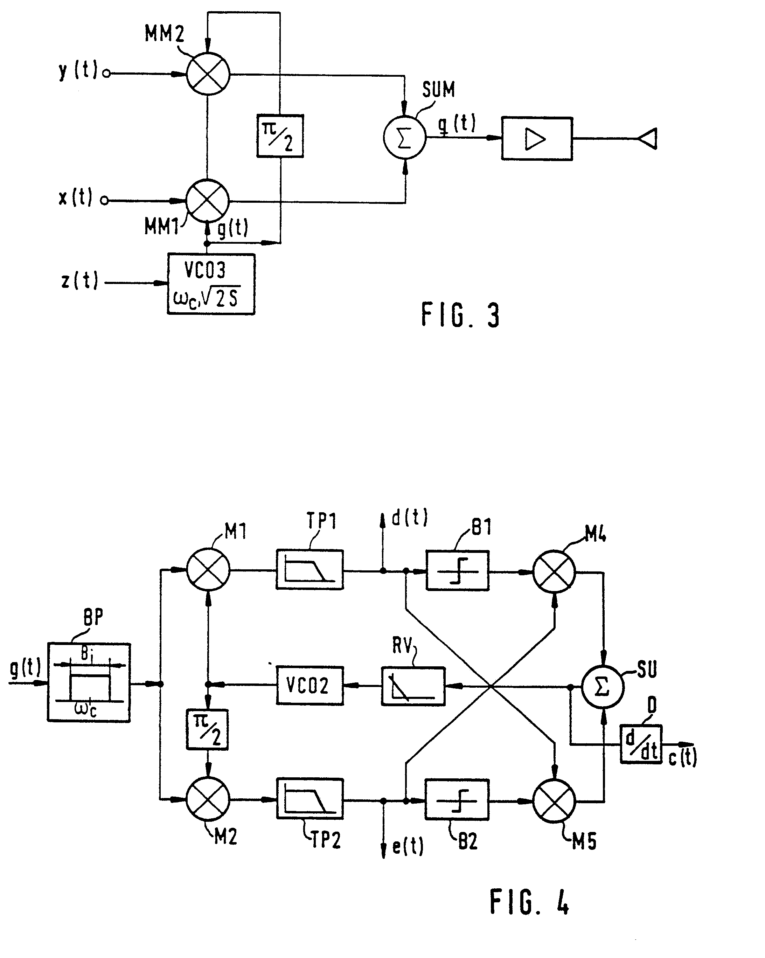

An Hand der Fig. 3 und 4 soll nun der Fall behandelt werden, daß das durch Freqeunz- und Phasenumtastung modulierte Trägersignal zwei verschiedene Frequenz- und vier verschiedene Phasenzustände annehmen kann. Ein solches FSK-QPSK Signal wird auf folgende Weise gebildet (vgl. Fig. 3).

Ein spannungsgesteuerter Oszillator VCO3 gibt ein Trägersignal

(14)

$$g(t) = \sqrt{2S} \cos\left(\omega_c t + \Delta\omega \int_0^\tau z(t) + \varphi_\tau \right)$$

ab, das gesteuert durch ein digitales Signal z(t) = ± 1 entweder die um Δω erhöhte oder erniedrigte Mittenfrequenz ωc annimmt.

Das Ausgangssignal g(t) des spannungsgesteuerten Oszillators wird in einem ersten Multiplizierer MM1 mit einem zweiten digitalen Signal x(t) = ± 1 und in einem zweiten Multiplizierer MM2 um π/2 phasenverschoben mit einem dritten digitalen Signal y(t) = ± 1 multipliziert. Die aus der Multiplikation hervorgehenden Signale werden in einem Summierer SUM zusammengefaßt und ergeben das Signal

(15)

$$q(t) = x(t)\sqrt{2S}\cos\left(\omega_c t + \Delta\omega \int_0^\tau z(t)\, dt + \varphi_\tau\right) + y(t)\sqrt{2S}\sin\left(\omega_c t + \Delta\omega \int_0^\tau z(t)\, dt + \varphi_\tau\right).$$

Dieses sich aus zwei Quadraturkomponenten zusammensetzende Signal q(t) wird nach dem gleichen auf dem Costas-Prinzip beruhenden Verfahren demoduliert, wie es bereits oben erläutert worden ist. Das in Fig. 4 dargestellte Blockschaltbild besitzt daher zum größten Teil die gleichen Komponenten wie das in Fig. 2 gezeigte.

Gegenüber der Demodulation eines FSK-2PSK Signals gemäß Fig. 2 erfolgt bei der Demodulation eines FSK-QPSK Signals gemäß Fig. 4 die Zusammenfassung der Ausgangssignale der Tiefpaßfilter TP1, TP2 auf eine andere Weise. Das Ausgangssignal des Tiefpaßfilters TP1 wird nämlich, nachdem es einen Begrenzer B1 durchlaufen hat, mit dem Ausgangssignal des Tiefpaßfilters TP2 in einem ersten Multiplizierer M4 multipliziert, und das Ausgangssignal des Tiefpaßfilters TP2 wird, nachdem es einen Begrenzer B2 durchlaufen hat, mit dem Ausgangssignal des Tiefpaßfilters TP1 in einem zweiten Multiplizierer M5 multipliziert. Beide aus der Multiplikation hervorgehenden Signale werden einander in einem Summierer SU additiv überlagert. Aus dem Ausgangssignal des Summierers SU wird einerseits das Steuersignal für den spannungsgesteuerten Oszillator VCO2 und andererseits durch Differenzierung ein dem Frequenzumtastsignal z(t) proportionales Signal c(t) abgeleitet.

Die den beiden Phasentastsignalen x(t) und y(t) proportionalen Signale d(t) und e(t) stehen an den Ausgängen der beiden Tiefpaßfilter TP1 und TP2 zur Verfügung.

Bei einem FSK-2PSK Signal berechnet sich für den PSK-Anteil eine Bitfehlerwahrscheinlichkeit von

$$P_{PSK} = \frac{1}{2}\, erfc\left[\sqrt{\frac{2S}{N}}\right]$$

und für den FSK-Anteil eine Bitfehlerwahrscheinlichkeit von

$$P_{FSK} = \frac{1}{2}\, erfc\left[\sqrt{\frac{2S}{N} \cdot \frac{\frac{2S}{N}h^2 96}{5 + 8\frac{2S}{N}}}\right], \text{ wobei}$$

S/N das Signal-Rauschleistungsverhältnis und h der Modulationshub ist.

Für die Bedingung

$$\frac{\frac{2S}{N}h^2 96}{5 + 8\frac{2S}{N}} \simeq 1,$$

welche mit einem Modulationshub h ≃ 0,3 und einem guten Signal-Rauschleistungsverhältnis S/N ≃ 5 realisierbar ist, ergibt sich eine Gesamt-Bitfehlerwahrscheinlichkeit

$$P_{ges} = \frac{1}{2} \, erfc\left[\sqrt{\frac{2S}{N}}\,\right].$$

Die Gesamt-Bitfehlerwahrscheinlichkeit für ein FSK-2PSK Signal ist also für h $\simeq$ 0,3 genau so groß wir für ein reines 2PSK Signal, welches halb soviele Signalzustände aufweist wie das FSK-2PSK Signal.

Im Vergleich zur bekannten QPSK Modulation wird die gleiche Gesamt-Bitfehlerwahrscheinlichkeit bei halber Signalleistung und gleicher Anzahl von Signalzuständen erreicht. Der Aufbau von Sender und Empfänger ist dabei wesentlich vereinfacht.

## Patentanspruch

Verfahren zum Demodulieren eines sowohl durch Frequenzumtastung als auch durch Phasenumtastung modulierten Trägersignals, das die Schritte enthält, daß dieses modulierte Trägersignal in einer Costas-Phasenregelschleife zunächst in einem ersten Multiplizierer (M1) mit einem von einem spannungsgesteuerten Oszillator (VCO2) abgegebenen Bezugssignal (so(t)) und parallel dazu in einem zweiten Multiplizierer (M2) mit dem um $\pi/2$ phasenverschobenen Bezugssignal (so'(t)) multipliziert wird, daß dann aus den Ausgangssignalen (s₁(t), s₂(t)) der Multiplizierer (M1, M2) die unterhalb der Trägerfrequenz liegenden Signalanteile herausgefiltert und daraus die Phasenumtastsignale abgeleitet werden, daß diese aus den Ausgangssignalen (s₁(t), s₂(t)) der Multiplizierer (M1, M2) herausgefilterten Signalanteile (s₁'(t), s₂'(t)) miteinander zu einem Signal (s₃(t)) durch Multiplikation (M3) verknüpft werden, aus dem die Information über die Phasenablage zwischen dem modulierten Trägersignal und dem vom spannungsgesteuerten Oszillator abgegebenen Bezugssignal herausgefiltert und dem spannungsgesteuerten Oszillator (VCO2) zugeführt wird, und daß aus dem durch die Verknüpfung gebildeten Signal (s₃(t)) durch Differenzierung (D) das Frequenzumtastsignal abgeleitet wird, wobei $\Delta\omega \cdot T \ll 1$ gilt mit $\Delta\omega$ = Modulationshub der Frequenzumtastung und T = Symboldauer der modulierenden Datensignale.

## Claim

Method for demodulating a carrier signal modulated by frequency shift keying as well as also by phase shift keying, which method contains the steps that this modulated carrier signal is first multiplied in a Costas phase-regulating loop by a reference signal (so(t)) delivered by a voltage-controlled oscillator (VCO2) in a first multiplier (M1) and parallelly thereto by the reference signal (so'(t)) displaced in phase through $\pi/2$ in a second multiplier (M2), that the signal components lying below the carrier frequency are then filtered out of the output signals (s₁ (t), s₂ (t)) of the multipliers (M1, M2) and the phase shift keying signals are derived therefrom, that these signal components (s₁' (t), s₂'(t)) filtered out of the output signals (s₁ (t), s₂(t)) of the multipliers (M1, M2) are interlinked one with the other by multiplication (M3) into a signal (s₃(t)), from which the information about the phase difference between the modulated carrier signal and the reference signal delivered by the voltage-controlled oscillator is filtered out and fed to the voltage-controlled oscillator (VCO2), and that the frequency shift keying signal is derived by differentiation (D) from the signal (s₃(t)) formed by the interlinking, wherein $\Delta\omega \cdot T \ll 1$ applies with $\Delta\omega$ = modulation depth of the frequency shift keying and T = symbol duration of the data signals to be modulated.

## Revendication

Procédé pour démoduler un signal porteur modulé à la fois par déplacement de fréquence et par manipulation de déphasage, qui comporte les opérations consistant à multiplier d'abord ce signal porteur modulé dans un premier multiplicateur (M1) d'une boucle de réglage de phase de Costa par un signal de référence (so(t)) délivré par un oscillateur commandé par tension (VCO2) et à le multiplier parallèlement à cela, dans un deuxième multiplicateur (M2), par le signal de référence (so'(t)) déphasé de $\pi/2$, à extraire ensuite par filtrage des signaux de sortie (s₁(t), s₂(t)) des multiplicateurs (M1, M2), les fractions de signal se trouvant au-dessous de la fréquence porteuse et à dériver de ces fractions de signal les signaux de manipulation de déphasage, à combiner ensemble, par multiplication (M3), les fractions de signal (s₁'(t), s₂'(t)), extraites par filtrage des signaux de sortie (s₁(t), s₂(t)) des multiplicateurs (M1, M2), en un signal (s₃(t)), d'où est extraite, par filtrage, l'information relative à l'écart de phase entre le signal porteur modulé et le signal de référence délivré par l'oscillateur commandé par tension, information qui est appliquée à l'oscillateur commandé par tension (VCO2), et à dériver du signal (s₃(t)) formé par la combinaison, par différentiation (D), le signal de déplacement de fréquence, procédé dans lequel $\Delta\omega \cdot T \ll 1$, où $\Delta\omega$ = l'amplitude de la modulation par déplacement de fréquence et T = la durée de symbole des signaux de données modulants.

FIG.1

FIG. 2

FIG. 3

FIG. 4